Europäisches Patentamt

European Patent Office

Office européen des brevets

(19)

(11) Veröffentlichungsnummer: **0 244 738**
**A2**

(12) **EUROPÄISCHE PATENTANMELDUNG**

(21) Anmeldenummer: **87106159.4**

(22) Anmeldetag: **28.04.87**

(51) Int. Cl.4: **H01B 3/44** , **C09D 5/34** ,
**C09K 3/00**

(30) Priorität: **06.05.86 DE 3615241**

(43) Veröffentlichungstag der Anmeldung:
**11.11.87 Patentblatt 87/46**

(84) Benannte Vertragsstaaten:
**BE DE FR GB NL**

(71) Anmelder: **Teroson GmbH**
**Hans-Bunte-Strasse 4**
**D-6900 Heidelberg 1(DE)**

(72) Erfinder: **Rocholl, Martin-G., Dr.**
**Scheffelstrasse 8**
**D-6900 Heidelberg 1(DE)**

(74) Vertreter: **UEXKÜLL & STOLBERG**
**Patentanwälte**
**Beselerstrasse 4**
**D-2000 Hamburg 52(DE)**

(54) **Dichtstoff.**

(57) Beschrieben wird ein Dichtstoff auf Basis von Butylkautschuk, Polyisobutylen und gegebenenfalls Ruß, der im Unterschied zu bekannten Dichtstoffen dieser Art 30 bis 55 Gew.% Kaolin enthält. Die Butylkautschukkomponente besteht vorzugsweise aus einer Mischung aus ungesättigtem und vernetztem Butylkautschuk, während die Polyisobutylenkomponente vorzugsweise aus einer Mischung von Polyisobutylenen mit unterschiedlichem Molekulargewicht besteht. Der erfindungsgemäße Dichtstoff kann neben den genannten Komponenten noch weitere Komponenten wie pyrogene Kieselsäure und Polyethylen niederer Dichte sowie übliche Bestandteile enthalten. Besonders eignet sich der neue Dichtstoff zur Verwendung in Kabelmuffen, insbesondere Kabelmuffen für Nachrichtenkabel.

EP 0 244 738 A2

## Dischtstoff

Die Erfindung betrifft einen neuen Dichtstoff auf Basis von Butylkautschuk, Polyisobutylen und gegebenenfalls Ruß mit stark erhöhtem spezifischen elektrischen Widerstand und erheblich verbesserter Zeitstandfestigkeit, der sich sehr gut zur Verwendung in Kabelmuffen eignet.

Kabelmuffen für Nachrichtenkabel müssen insbesondere bei Erdverlegung dicht gegen Feuchtigkeitseintritt, zur Vermeidung von Leck-bzw. Kriechströmen elektrisch gut isoliert und gegenüber Luftdruckschwankungen infolge von Temperaturänderungen (Sommer/Winter) unabhängig sein. Eine durch Kriechströme bewirkte negative Aufladung eines an sich korrosionsbeständigen Metalls oder einer an sich korrosionsbeständigen Legierung bewirkt, daß das Metall praktisch unedler wird und dementsprechend leichter korrodiert. Zur Vermeidung von Langzeitkorrosionsschäden sind also Dichtstoffe erforderlich, die zu Kabelmuffen führen, die die zuvor genannten Eigenschaften aufweisen.

Ein im Handel erhältlicher, bisher für Kabelmuffen verwendeter Dichtstoff besteht beispielsweise aus Polyisobutylen, Butylkautschuk und Ruß (z.B. hoch abrasivem Flammruß). Gewöhnlich stellt das Polyisobutylen in derartigen Produkten die größte Komponente dar (um 40 %) während Butylkautschuk (um 25 Gew.%) und Ruß (um 35 Gew.%) in etwas geringeren Mengen vorhanden sind. Dieser Dichtstoff besitzt eine geringe elektrische Leitfähigkeit und eine den Spezifikationen der Industrie genügende Zeitstandfestigkeit. Es hat sich allerdings gezeigt, daß zur Verhinderung von Langzeitkorrosionsschäden bei den Verschlußteilen in Kabelmuffen eine noch niedrigere elektrische Leitfähigkeit des Dichtstoffs, d.h. eine bessere elektrische Isolierung durch den Dichtstoff, und eine verbesserte Zeitstandfestigkeit wünschenswert wären.

Der Erfindung liegt somit die Aufgabe zugrunde, einen Dichtstoff vorzuschlagen, der eine gegenüber bisher in Kabelmuffen verwendeten Produkten verringerte elektrische Leitfähigkeit bzw. einen höheren spezifischen elektrischen Widerstand aufweist, gleichzeitig aber hinsichtlich Zeitstandfestigkeit mindestens ebensogut und nach Möglichkeit besser als die bisher verwendeten Produkte ist.

Zur Lösung dieser Aufgabe wird ein Dichtstoff auf Basis von Butylkautschuk, Polyisobutylen und gegebenenfalls Ruß vorgeschlagen, der dadurch gekennzeichnet ist, daß er 30 bis 55 Gew.% Kaolin enthält.

Es hat sich überraschend gezeigt, daß die Veränderung der Zusammensetzung von bisher für Kabelmuffen bekannten Dichtstoffen auf Basis von Butylkautschuk, Polyisobutylen und Ruß durch die erfindungsgemäße Einarbeitung großer Mengen Kaolin nicht nur zu einer völlig unerwartet starken Abnahme der elektrischen Leitfähigkeit im Verhältnis von bis zu etwa 1:200 000 sondern gleichzeitig zu einer Verbesserung der Zeitstandfestigkeit von bisher 2 bis 5 Stunden auf etwa 80 bis 90 Stunden führt. Durch den erfindungsgemäßen Gehalt des Dichtstoffs an Kaolin werden also beide für Kabelmuffendichtstoffe wesentlichen Eigenschaften, nämlich geringe elektrische Leitfähigkeit bzw. hoher spezifischer elektrischer Widerstand und gute Zeitstandfestigkeit gleichzeitig enorm verbessert.

Die Hauptkomponente des erfindungsgemäßen Dichtstoffs, der Kaolin, liegt in einer Menge von 30 bis 55 Gew.% und vorzugsweise in einer Menge von 40 bis 50 Gew.% vor. Er wird in gemahlener Form eingesetzt. Ein geeignetes Handelsprodukt hat beispielsweise eine solche Korngrößenverteilung, daß 32 bis 34 % eine Korngröße von weniger als 2 μm, über 17 % eine Korngröße von mehr als 10 μm und etwa 3 % eine Korngröße von mehr als 20 μm aufweisen.

Die Butylkautschukkomponente liegt vorzugsweise in einer Menge von 10 bis 25 Gew.% vor und besteht aus üblichem Butylkautschuk, wie er im Handel für die Herstellung von Dichtstoffen angeboten wird. Vorzugsweise wird allerdings keine einheitliche Butylkautschukkomponente verwendet, sondern eine Mischung aus ungesättigtem Butylkautschuk und vernetztem (vulkanisiertem) Butylkautschuk. Der ungesättigte Butylkautschuk weist vorzugsweise einen Ungesättigtheitsgrad von 1 bis 2,5 % und insbesondere etwa 1,5 bis 2 % auf. Das Gewichtsverhältnis von ungesättigtem Butylkautschuk zu vernetztem Butylkautschuk liegt vorzugsweise im Bereich von 4:1 bis 10:1.

Neben dem Kaolin bildet die Polyisobutylenkomponente normalerweise den mengenmäßig größten Bestandteil und liegt im erfindungsgemäßen Dichtstoff bevorzugt in einer Menge von 20 bis 50 Gew.% vor. Geeignet sind wiederum die im Handel erhältlichen und insbesondere für die Herstellung von Dichtstoffen angebotenen Produkte. Ähnlich wie beim Butylkautschuk besteht aber auch die Polyisobutylenkomponente vorzugsweise aus einer Mischung von verschiedenen Polyisobutylenen unterschiedlichen Molekulargewichts. Bevorzugt ist dabei eine Mischung im Gewichtsverhältnis von 10:1 bis 1:10, insbesondere 5:1 bis 1:5 aus Polyisobutylen mit einem Molekulargewicht von etwa 10 000 und Polyisobutylen mit einem Molekulargewicht von etwa 50 000. Die mengenmäßige Abstimmung sowohl der bevorzugten Butylkautschukmischungen als auch der bevorzugten Polyisobutylenmischungen richtet sich zum großen Teil nach der Verarbeitbarkeit der herzustellenden Rezeptur, d.h. die Bestandteile müssen so ausgewählt werden, daß ein bei der Herstellungstemperatur ausreichend fließfähiges Gesamtprodukt erhalten wird.

Wenngleich der erfindungsgemäße Dichtstoff hinsichtlich der hier im Vordergrund stehenden Eigenschaften keinen Ruß enthalten muß, wird ein gewisser Anteil Ruß häufig von der Industrie gefordert, und zwar aus Gründen der Lichtbeständigkeit, da Ruß ein sehr gutes Lichtschutzmaterial darstellt. Vorzugsweise werden erfindungsgemäß Farbruße eingesetzt. Selbstverständlich ist bei der Auswahl des Rußes darauf zu achten, daß ein Ruß mit möglichst geringer elektrischer Leitfähigkeit bzw. möglichst hohem spezifischen elektrischen Widerstand gewählt wird, damit die Vorteile des erfindungsgemäßen Dichtstoffes hinsichtlich geringer elektrischer Leitfähigkeit bzw. hohem spezifischen elektrischen Widerstand nicht gemindert werden oder sogar verloren gehen.

In einer bevorzugten Ausführungsform enthält der erfindungsgemäße Dichtstoff zusätzlich zum Kaolin pyrogene Kieselsäure, und zwar in einer Menge von bis zu 10 Gew.%, wobei Mengen von 3 bis 10 Gew.% bevorzugt sind.

In einer weiteren Ausführungsform enthält der erfindungsgemäße Dichtstoff untergeordnete Mengen Polyethylen niederer Dichte (LDPE) in einer Menge von bis zu 10 Gew.%, wobei Mengen von 1 bis 5 Gew.% bevorzugt sind. Die Kombination von Kaolin und Polyethylen führt zu einer zusätzlichen Verbesserung der Zeitstandfestigkeit des erfindungsgemäßen Dichtstoffs.

Selbstverständlich kann der erfindungsgemäße Dichtstoff weitere übliche Zusätze in untergeordneter Menge enthalten, wobei diese allerdings im Hinblick auf die erfindungsgemäß zu lösende Aufgabe keine Bedeutung besitzen, sondern in Abhängigkeit des speziellen Anwendungszwecks des Dichtstoff erforderlich sein können.

Die Herstellung des erfindungsgemäßen Dichtstoffes bietet keine Schwierigkeiten und erfolgt in gleicher Weise wie bei entsprechenden Produkten des Standes der Technik.

Im Prinzip werden die Butylkautschuk-und Polyisobutylenkomponenten auf eine ausreichend hohe Temperatur (z.B. 100 bis 200°C) erwärmt und im erweichten Zustand mit den weiteren Bestandteilen in beliebiger Reihenfolge oder auch gleichzeitig unter gründlicher Durchmischung versetzt. Vorzugsweise werden die in der erweichten Masse der zuvor genannten Komponenten homogen zu verteilenden Bestandteile wie Kaolin, Ruß und pyrogene Kieselsäure jeweils zusammen mit Anteilen der Isobutylenkomponente zugesetzt, d.h. die Isobutylenkomponente wird nicht in ihrer Gesamtheit zusammen mit der Butylkautschukkomponente vorgelegt, sondern stufenweise zusammen mit den in der erweichten Masse homogen zu verteilenden Komponenten eingearbeitet. Diese Vorgehensweise dient dazu, daß die erweichte Masse in der Mischvorrichtung eine ausreichend hohe Viskosität hat, um die zuvor genannten zugesetzten Bestandteile homogen in der Masse verteilen zu können. Wenn die Viskosität zu gering ist, kann unter Umständen eine homogene Verteilung beispielsweise des Kaolins nicht erreicht werden, da sich Klumpen bilden. Das Durchmischen wird jeweils solange fortgesetzt, bis eine homogene Mischung erhalten wird. Die hierfür eingesetzten Geräte sind die für die Herstellung derartiger Formulierungen üblichen (z.B. Kneter usw.).

Wie bereits einleitend erwähnt, ist es für Kabelmuffendichtstoffe für Nachrichtenkabel unbedingt erforderlich, daß sie gegenüber Luftdruckschwankungen infolge Temperaturänderungen widerstandsfähig sind. Außerdem müssen sie natürlich auch unter den wechselnden Umweltbedingungen eine gute Abdichtung gegen Feuchtigkeit bilden. Der Dichtstoff muß also seine Dichtfunktion auch unter Druckänderungen in der Kabelmuffe erfüllen. Die Beständigkeit gegenüber Druckveränderungen wird in der Weise gemessen, daß eine mit dem zu untersuchenden Dichtstoff abgedich tete Überdruckdose auf einen Luftüberdruck von 4 bar aufgedrückt wird und dann bei 60°C gelagert wird. Unter der Zeitstandfestigkeit versteht man die Zeitspanne, über die der Überdruck in der Überdruckdose aufrechterhalten bleibt. Der Übergang von 4 bar auf Athmosphärendruck erfolgt in der Regel sehr schnell (einige Sekunden bis etwa 3 min), sobald sich irgendwo eine erste Leckstelle gebildet hat, der Dichtstoff also unter dem erhöhten Druck seine Funktion nicht an allen Stellen ausreichend erfüllt.

Im einzelnen erfolgt die Messung der Zeitstandfestigkeit in der Weise, daß eine zur Schnur geformte Meßprobe des Dichtstoffes in eine in Deckel und Dose der Überdruckdose gefräßte Rinne eingelegt wird und die Überdruckdose anschließend verschlossen wird. Danach wird über ein an der Überdruckdose angebrachtes Ventil mit Druckluft auf 4 bar aufgedrückt und die ganze Meßzelle wird in einen auf 60°C geheizten Trockenschrank gestellt. Der Druckabfall in der Meßzelle wird in regelmäßigen Zeitabständen beobachtet.

Zur Bestimmung des spezifischen elektrischen Widerstands von Dichtstoffen wird so vorgegangen, daß das zu prüfende Material nach seiner Herstellung im Kneter zu einem Strang (Schnur) oder Band extrudiert und zu genau dimensionierten Prüfkörpern weiterverarbeitet wird. Dies geschieht durch Ablängen einer extrudierten runden Schnur oder durch Ausstanzen runder Plättchen von definiertem Durchmesser und definierter Dicke. Zur Erzielung eines möglichst gleichmäßigen Stromflusses durch den Querschnitt der Prüfkörper ist es unerläßlich, die Endflächen (der zylinderischen Schnüre oder Plättchen) leitfähig zu machen, um einen vollflächigen Kontakt mit den Stromzuleitungen zum Meßgerät sicherzustellen. Diese Kontaktierung der Prüfkörperendflächen erfolgt mit sogenanntem Leitsilber. Der so kontaktierte Prüfkörper wird auf eine gegen Erde isolierte Alumiumbasisplatte gelegt und mit einer eben solchen Alumiumplatte unter leichtem Druck abgedeckt. Dabei dürfen sich die Aluminiumplatten selbstverständlich nicht berühren (Kurzschluß!). Da es sich bei den Prüfkörpern um Materialien mit hohem elektrischen Widerstand handelt wird mit Wechselstrom (800 Hz) gemessen.

Beispiel

In einem Technikumskneter ohne Kühlung wurde ein erfindungsgemäßer Dichtstoff gemäß folgender Formulierung hergestellt:

| | |
|---|---|
| Ungesättigter Butylkautschuk | 14 Gew.% |
| Vernetzter Butylkautschuk | 2 Gew.% |
| Polyisobutylen (MG etwa 10000) | 23 Gew.% |
| Polyisobutylen (MG etwa 50000) | 8 Gew.% |
| Farbruß | 3 Gew.% |
| Kaolin | 44 Gew.% |
| Pyrogene Kieselsäure | 6 Gew.% |

Der verwendete ungesättigte Butylkautschuk besaß einen Ungesättigtheitsgrad von 1,6 %. Bei dem verwendeten Farbruß handelte es sich um einen Farbruß mit sehr hohem elektrischen Widerstand.

Der ungesättigte und der vernetzte Butylkautschuk sowie das Polyisobutylen mit einem Molekulargewicht von etwa 50000 wurden zusammen mit 1/11 der Gesamtmenge des Polyisobutylens mit einem Molekulargewicht von etwa 10000 in den Kneter gegeben und 3 Minuten lang vormastiziert und dann 15 Minuten lang geknetet. An schließend wurden der Farbruß und 2/11 der Gesamtmenge des Polyisobutylens mit einem Molekulargewicht von etwa 10000 zugegeben. Es wurde weitere 25 Minuten lang geknetet. Dann wurde die Hälfte des Kaolins zusammen mit weiteren 4/11 der Gesamtmenge des Polyisobutylens mit einem Molekulargewicht von etwa 10000 zugesetzt. Es wurde anschließend 20 Minuten lang geknetet. Danach wurde die zweite Hälfte des Kaolins zusammen mit 2/11 der Gesamtmenge des Butylisobutylens mit einem Molekulargewicht von etwa 10000 zugegeben. Es wurde weitere 20 Minuten bei der inzwischen durch das Kneten auf 100°C angestiegenen Temperatur geknetet. Danach wurde die Hälfte der pyrogenen Kieselsäure zusammen mit 1/11 der Gesamtmenge des Polyisobutylens mit einem Molekulargewicht von etwa 10000 zugegeben. Es wurde weitere 15 Minuten geknetet. Danach wurde der Rest der Kieselsäure zusammen mit einem weiteren Elftel der Gesamtmenge des Polyisobutylens mit einem Molekulargewicht von etwa 10000 zugesetzt. Es wurde weitere 15 Minuten lang geknetet. Dann wurde auf 150°C aufgeheizt und 30 Minuten lang bei dieser Temperatur geknetet.

Aus dem so erhaltenen Dichtstoff wurde in der oben beschriebenen Weise ein runder plättchenförmiger Prüfkörper mit einem Durchmesser von 4,3 cm und einer Dicke von 0,09 cm zur Menge des elektrischen Widerstands hergestellt. Unter Berücksichtigung der Abmessungen des Prüfkörpers wurde dann der spezifische elektrische Widerstand berechnet. In gleicher Weise wurde aus einem im Handel erhältlichen Kontaktmuffendichtstoff aus Butylkautschuk, Polyisobutylen und Ruß ein runder plättchenförmiger Prüfkörper mit einem Durchmesser von 2,5 cm und einer Dicke von 0,2 cm hergestellt und ebenfalls hinsichtlich seines elektrischen Wider stands untersucht. Während der spezifische elektrische Widerstand des im Handel erhältlichen Dichtstoffs zu $5,1 \times 10^3$ $\Omega \times cm$ ermittelt wurde, ergab sich für den erfindungsgemäßen Dichtstoff ein spezifischer elektrischer Widerstand von $1,086 \times 10^9 \ \Omega \times cm$, also ein um den Faktor 212 941 größerer elektrischer Widerstand. Der Vollständigkeit halber sei erwähnt, daß die angegebenen Werte auf der Untersuchung von jeweils 3 Proben und Mittelung der erhaltenen Meßergebnisse beruhen.

Aus früheren Zeitstandprüfungen in der oben angegebenen Weise war bekannt, daß im Handel erhältliche Kabelmuffendichtstoffe auf Basis von Butylkautschuk, Polyisobutylen und Ruß bei der Zeitstandprüfung Zeistandfestigkeiten von 2 bis 5 Stunden ergeben. Dies gilt auch für den bereits oben bei der Bestimmung des spezifischen elektrischen Widerstands zum Vergleich herangezogenen Dichtstoff. Mit dem in der obigen Weise hergestellten erfindungsgemäßen Dichtstoff wurden bei der Zeitstandprüfung bei der Untersuchung von 5 Mustern Zeitstandfestigkeiten von > 90, 91, 92, 93 und 89 Stunden erhalten. Berücksichtigt man, daß bisher eine Zeitstandfestigkeit von 5 Stunden bei ausreichend hohem spezifischen elektrischen Widerstand als wahrscheinliches erreichbares Maximum galt, erkennt man das Ausmaß der erfindungsgemäß erreichten Verbesserung.

**Ansprüche**

1. Dichtstoff auf Basis von Butylkautschuk, Polyisobutylen und gegebenenfalls Ruß, dadurch gekennzeichnet, daß er 30 bis 55 Gew.% Kaolin enthält.

2. Dichtstoff nach Anspruch 1, dadurch gekennzeichnet, daß er 40 bis 50 Gew.% Kaolin enthält.

3. Dichtstoff nach Anspruch 1 oder 2, dadurch gekennzeichnet, daß er 10 bis 25 Gew.% Butylkautschuk, 20 bis 50 Gew.% Polyisobutylen und 0 bis 10 Gew.% Ruß enthält.

4. Dichtstoff nach einem der Ansprüche 1 bis 3, dadurch gekennzeichnet, daß die Butylkautschukkomponente eine Mischung im Gewichtsverhältnis 4:1 bis 10:1 aus Butylkautschuk mit einem Ungesättigtheitsgrad von 1 bis 2,5 % und vernetztem Butylkautschuk ist.

5. Dichtstoff nach einem der Ansprüche 1 bis 4, dadurch gekennzeichnet, daß die Polyisobutylenkomponente eine Mischung im Gewichtsverhältnis 10:1 bis 1:10 aus Polyisobutylen mit einem Molekulargewicht von etwa 10 000 und Polyisobutylen mit einem Molekulargewicht von etwa 50 000 ist.

6. Dichtstoff nach einem der Ansprüche 1 bis 5, dadurch gekennzeichnet, daß er zusätzlich bis zu 10 Gew.% pyrogene Kieselsäure enthält.

7. Dichtstoff nach einem der Ansprüche 1 bis 6, dadurch gekennzeichnet, daß er zusätzlich bis zu 10 Gew.% Polyethylen niederer Dichte enthält.

8. Verwendung des Dichtstoffs gemäß einem der Ansprüche 1 bis 7 in Kabelmuffen, insbesondere Kabelmuffen für Nachrichtenkabel.